# EUROPÄISCHE PATENTSCHRIFT

(11) **EP 2 307 736 B1**
(45) Veröffentlichungstag und Bekanntmachung des Hinweises auf die Patenterteilung: **20.04.2016**
(21) Anmeldenummer: 09753536.3
(22) Anmeldetag: 26.05.2009
(51) Int. Cl.: F04D 27/02, F04D 29/52, F04D 29/68, F01D 9/06, F01D 25/26

(54) **GEHÄUSE FÜR EINEN VERDICHTER EINER GASTURBINE UND VERDICHTER MIT EINEM SOLCHEN GEHÄUSE**
CASING FOR A COMPRESSOR OF A GAS TURBINE AND COMPRESSOR WITH SUCH A CASING
CARTER DE COMPRESSEUR DE TURBINE À GAZ ET COMPRESSEUR MUNI D'UN TEL CARTER

(30) Priorität: 28.05.2008 DE 102008025511
(43) Veröffentlichungstag der Anmeldung: 13.04.2011
(73) Patentinhaber: MTU Aero Engines AG, 80995 München (DE)
(72) Erfinder: SCHÜTZ, Gottfried, 82327 Tutzing (DE)
(86) Internationale Anmeldenummer: PCT/DE2009/000723
(87) Internationale Veröffentlichungsnummer: WO 2009/143820

(56) Entgegenhaltungen:
- EP-A1- 0 391 525
- EP-A2- 0 947 669
- GB-A- 779 667
- GB-A- 2 048 386
- GB-A- 2 114 661
- US-A- 5 167 488

## Beschreibung

Die vorliegende Erfindung betrifft ein Gehäuse für einen Verdichter einer Gasturbine, insbesondere einer Fluggasturbine, mit einem Außengehäuse mit mindestens einer Luftzuführöffnung und einem aus mindestens zwei Gehäusesegmenten ausgebildeten Innengehäuse, wobei die Gehäusesegmente mindestens eine Einblasungsdüse zum Einblasen von über die Luftzuführöffnungen angesaugter Luft in einen Strömungskanal im Bereich von Schaufelspitzen von Schaufeln eines Rotors des Verdichters aufweisen. Die Erfindung betrifft weiterhin einen Verdichter einer Gasturbine mit einem solchen Gehäuse.

Ein gattungsgemäßes Gehäuse für einen Verdichter einer Gasturbine ist aus dem Dokument GB 779 667 A bekannt.

Bei Verdichtern von Gasturbinen markiert die so genannte Pumpgrenze bei gegebener Druckerhöhung den kleinstmöglichen Gasdurchfluss, bei dem der Verdichter noch stabil betrieben werden kann. Bei einem Zusammenbrechen der gesamten Verdichterströmung entlädt sich der normalerweise hinter dem Verdichter aufgebaute Druck schlagartig nach vorne in Richtung des niedrigen Drucks. Anschließend erfolgt wiederum eine Gasansaugung durch den Verdichter bis es wieder zu einem schlagartigen Druckabbau kommt. Dieser Vorgang wird als "Verdichterpumpen" bezeichnet. Ein derartiges "Verdichterpumpen" muss bei Gasturbinen insbesondere bei Fluggasturbinen unbedingt verhindert werden, da hierdurch der Verdichter wie auch nachfolgende Bauteile der Gasturbine, nämlich die Brennkammer und die Turbine beschädigt werden können. Die Erweiterung derartiger Pumpgrenzen ist daher erwünscht. Dabei hat sich gezeigt, dass eine Pumpgrenzenerweiterung durch ein Einblasen von Luft in den Schaufelspitzenbereich eines Turboverdichters möglich ist. Um diese Einblasung zu realisieren, ist die Zufuhr von Luft mit hohem Druck von außen in das Gehäuse des Verdichters notwendig. Diese Luft muss dann gezielt durch Düsen vom Gehäuse in den Strömungskanal eingebracht werden, was üblicherweise durch geschlitzte Gehäusesegmente geschieht. Dabei wird bei einem üblicherweise zweischalig aufgebauten Verdichtergehäuse ein umlaufender Druckausgleichsraum, ein so genanntes Plenum, im Gehäuse mit Druck beaufschlagt und die Luft dann durch die genannten Gehäusesegmente mit geformten Schlitzen bzw. Düsen in den Strömungskanal geleitet.

Nachteilig an diesen bekannten Verdichtergehäusen ist jedoch die notwendige Abdichtung zwischen den einzelnen Gehäusesegmenten zum Beispiel mittels Dichtblechen, die jedoch keine hundertprozentige Abdichtung gewährleisten. Zudem werden die Gehäusesegmente mit einer hohen Druckdifferenz zwischen dem Druckausgleichsraum und dem Strömungskanal beaufschlagt, wodurch die Gehäusesegmente strukturell relativ stark ausgelegt werden müssen und ein entsprechend hohes Gewicht aufweisen.

Es ist daher Aufgabe der vorliegenden Erfindung ein gattungsgemäßes Gehäuse für einen Verdichter einer Gasturbine, insbesondere einer Fluggasturbine, bereitzustellen, welches keine aufwändigen Dichtmaßnahmen zwischen einzelnen Gehäusesegmenten erfordert und zudem ein relativ geringes Gewicht aufweist.

Es ist weiterhin Aufgabe der vorliegenden Erfindung einen gattungsgemäßen Verdichter bereitzustellen, der relativ kostengünstig bei einem reduzierten Gewicht hergestellt werden kann.

Gelöst werden diese Aufgaben durch ein Gehäuse gemäß den Merkmalen des Anspruchs 1 und einen Verdichter gemäß den Merkmalen des Anspruchs 11.

Vorteilhafte Ausgestaltungen der Erfindung sind in den jeweiligen Unteransprüchen beschrieben.

Ein erfindungsgemäßes Gehäuse für einen Verdichter einer Gasturbine, insbesondere einer Fluggasturbine, umfasst ein Außengehäuse mit mindestens einer Luftzuführöffnung und ein aus mindestens zwei Gehäusesegmenten gebildetes Innengehäuse, wobei die Gehäusesegmente mindestens eine Einblasungsdüse zum Einblasen von über die Luftzuführöffnung zugeführter Luft in einen Strömungskanal im Bereich von Schaufelspitzen von Schaufeln eines Rotors des Verdichters aufweisen. Ein integral ausgebildeter Luftführungskanal führt die Luft aus einem in der zugeordneten Luftzuführöffnung des Außengehäuses angeordneten Luftzuführelement direkt zu der mindestens einen Einblasungsdüse. Erfindungsgemäß erfolgt die Luftzuführung direkt in jedes Gehäusesegment, wodurch ein Druckausgleichsraum nicht mehr notwendig ist. Daher brauchen die Gehäusesegmente nicht mehr gegeneinander mit zum Beispiel Dichtblechen abgedichtet werden. Zudem werden die Gehäusesegmente nicht durch einen großflächig aufgebrachten hohen Druck belastet. Dadurch können die einzelnen Gehäusesegmente des Gehäuses strukturell leichter ausgelegt werden und weisen daher ein geringeres Gewicht auf. Dadurch ergibt sich insgesamt eine deutliche Verringerung des Gewichts des erfindungsgemäßen Verdichtergehäuses. Schließlich werden Leckagen vermieden, da in jedem Gehäusesegment mindestens ein Luftführungskanal mit einer entsprechenden Einblasungsdüse integral ausgebildet ist.

In vorteilhaften Ausgestaltungen des erfindungsgemäßen Gehäuses ist das Luftzuführelement einstückig mit dem Gehäusesegment ausgebildet oder als separates Element ausgebildet. Dabei ist es möglich, dass das Luftzuführelement stutzen- oder rohrartig ausgebildet ist. Des Weiteren ist es möglich, dass bei einer separaten Ausbildung des Luftzuführelements dieses als Einschraubstutzen ausgebildet wird, derart, dass eine Verschraubung des Luftzuführelements am Außengehäuse erfolgt. Des Weiteren ist es möglich, dass bei einem separat ausgebildeten Luftzuführelement an dem dem Außengehäuse zugewandten Bereich des Gehäusesegmentes ein eine Öffnung im Gehäusesegment umgebender Kragen zur Auflage des Luftzuführelements ausgebildet ist. Üblicherweise wird in diesem Fall zwischen dem Luftzuführelement und dem Luftführungskanal mindestens eine Dichtung, insbesondere eine als O-Ring ausgebildete Dichtung angeordnet. Aufgrund der erfindungsgemäßen Ausbildung des Gehäusesegments des Verdichtergehäuses erfolgt die Abdichtung des Luftzuführelements am Gehäusesegment auf einem einfach zu beherrschenden Kreisquerschnitt, zum Beispiel mittels des genannten O-Rings.

In einer weiteren vorteilhaften Ausgestaltung des erfindungsgemäßen Gehäuses ist die Einblasungsdüse schlitzartig ausgebildet. Die schlitzartige Ausbildung der Einblasungsdüse gewährleistet die Zufuhr von Luft mit hohem Druck in den Strömungskanal.

In weiteren vorteilhaften Ausgestaltungen des erfindungsgemäßen Gehäuses besteht das Gehäusesegment aus Metall, einer Metall-Legierung, aus Keramik, einem faserverstärktem Verbundwerkstoff oder aus einer Kombination von mindestens zwei dieser Werkstoffe. Die Werkstoffauswahl erfolgt dabei entsprechend den Druck- und Temperaturanforderungen an das Verdichtergehäuse. Im Vergleich zu üblichen Verdichtergehäusen kann jedoch auf eine größere Vielzahl an Werkstoffen zurückgegriffen werden, da insbesondere die Anforderung bezüglich der Druckstabilität erfindungsgemäß verringert werden können.

Bei einem erfindungsgemäßen Gehäuse wird das Gehäusesegment in bevorzugter Weise mittels eines generativen Fertigungsverfahrens und/oder eines elektrochemischen Bearbeitungsverfahrens und/oder mittels Feingießen hergestellt. Bei dem generativen Fertigungsverfahren kann es sich um ein Laser-Sintern handeln.

Ein erfindungsgemäßer Verdichter einer Gasturbine, insbesondere einer Fluggasturbine, umfasst ein Gehäuse wie im Vorhergehenden beschrieben. Durch die Verwendung eines derartigen Gehäuses können einerseits die Kosten für den Verdichter insgesamt reduziert werden und andererseits kann das Gewicht des Verdichters signifikant reduziert werden. Die Vorteile des für den erfindungsgemäßen Verdichter verwendeten Gehäuses wurden bereits im Vorhergehenden beschrieben.

Weitere Vorteile, Merkmale und Einzelheiten der Erfindung ergeben sich aus der nachfolgenden Beschreibung eines zeichnerisch dargestellten Ausführungsbeispiels. Dabei zeigen
- Figur 1: eine schematische Darstellung eines Querschnitts durch einen Teilbereich eines erfindungsgemäßen Gehäuses;
- Figur 2: eine schematische Darstellung eines Längsschnitts durch einen Teilbereich eines erfindungsgemäßen Gehäuses;
- Figur 3: eine schematische, teilweise geschnittene Darstellung eines Gehäusesegments des erfindungsgemäßes Gehäuses; und
- Figur 4: eine schematische, teilweise geschnittene Darstellung des Gehäusesegments des erfindungsgemäßes Gehäuses.

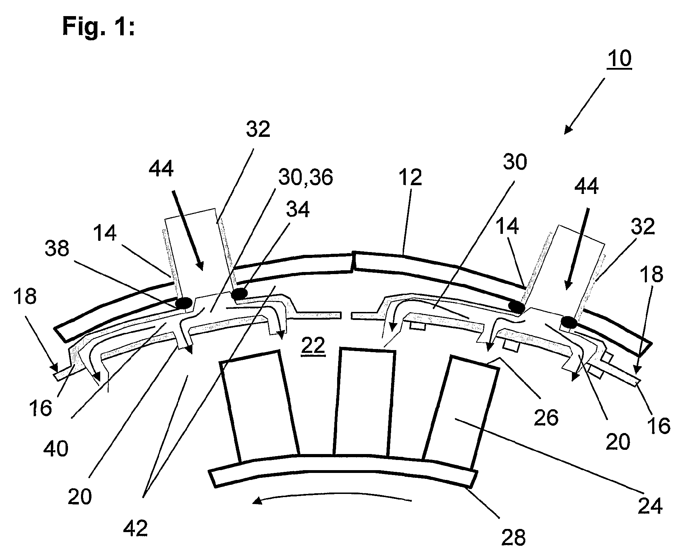

Figur 1 zeigt eine schematische Darstellung eines Querschnitts durch einen Teilbereich eines Gehäuses 10 eines Verdichters, insbesondere eines Turboverdichters einer Fluggasturbine. Das Gehäuse 10 ist dabei zweischalig ausgebildet und umfasst ein Außengehäuse 12 mit mehreren Luftzuführöffnungen 14 und ein aus mehreren einzelnen Gehäusesegmenten 16 ausgebildetes Innengehäuse 18. Man erkennt, dass die Gehäusesegmente 16 mehrere Einblasungsdüsen 20 zum Einblasen von über die Luftzuführöffnungen 14 zugeführter Luft in einen Strömungskanal 22 im Bereich von Schaufelspitzen 26 von Schaufeln 24 eines Rotors 28 des Verdichters aufweisen. Das Gehäusesegment 16 weist zudem einen Luftführungskanal 30 auf, wobei der Luftführungskanal 30 derart ausgebildet ist, dass eine direkte Luftführung über ein in der Luftzuführöffnung 14 des Außengehäuses 12 angeordnetes Luftzuführelement 32 zu den Einblasungsdüsen 20 erfolgt. Zwischen dem Außengehäuse 12 und dem durch die Gehäusesegmente 16 ausgebildeten Innengehäuse 18 entsteht ein Bereich 42 mit lediglich niedrigem Druck, so dass keine aufwändigen Dichtmaßnahmen zwischen den einzelnen Gehäusesegmenten 16 notwendig sind. Bereiche 40 mit hohem Druck entsprechen den von dem Luftführungskanal 30 umgebenden Bereichen.

Des Weiteren erkennt man, dass das Luftzuführelement 32 rohrartig als separates Element ausgebildet ist. Zwischen dem Luftzuführelement 32 und dem Luftführungskanal 30 ist dabei eine Dichtung 34, insbesondere eine als O-Ring ausgebildete Dichtung angeordnet. Die Dichtung 34 liegt dabei auf einem an dem dem Außengehäuse 12 zugewandten Bereich des Gehäusesegments 16 ausgebildeten und eine Öffnung 36 umgebenden Kragen 38 auf. Die Richtung eines Luftstroms 44 von einem Bereich außerhalb des Außengehäuses 12 bis in den Strömungskanal 22 ist mittels der Pfeile schematisch dargestellt.

Die Gehäusesegmente 16 können aus Metall, einer Metall-Legierung, aus Keramik, einem faserverstärktem Verbundwerkstoff oder aus einer Kombination aus mindestens zwei dieser Werkstoffe bestehen.

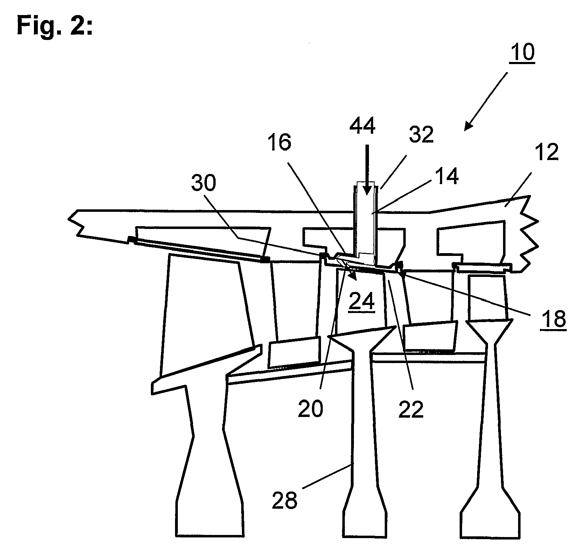

Figur 2 zeigt eine schematische Darstellung eines Längsschnitts durch einen Teilbereich des Gehäuses 10. Man erkennt wiederum den zweischaligen Aufbau des Gehäuses 10 bestehend aus einem Außengehäuse 12 und einem durch die Gehäusesegmente 16 ausgebildeten Innengehäuse 18. Über das rohrförmige Luftzuführelement 32 gelangt Luft von außerhalb des Verdichtergehäuses 10 in den Strömungskanal 22 im Bereich der Spitzen der Schaufeln 24. In dem dargestellten Ausführungsbeispiel bildet die Schaufel 24 mit dem Rotor 28 einen Teil einer Verdichterstufe eines Turboverdichters. Die über das Luftzuführelement 32 und den Luftführungskanal 30 des Gehäusesegments 16 geleitete Luft wird über die Einblasungsdüse 20 in den Strömungskanal 22 mit hohem Druck eingeleitet.

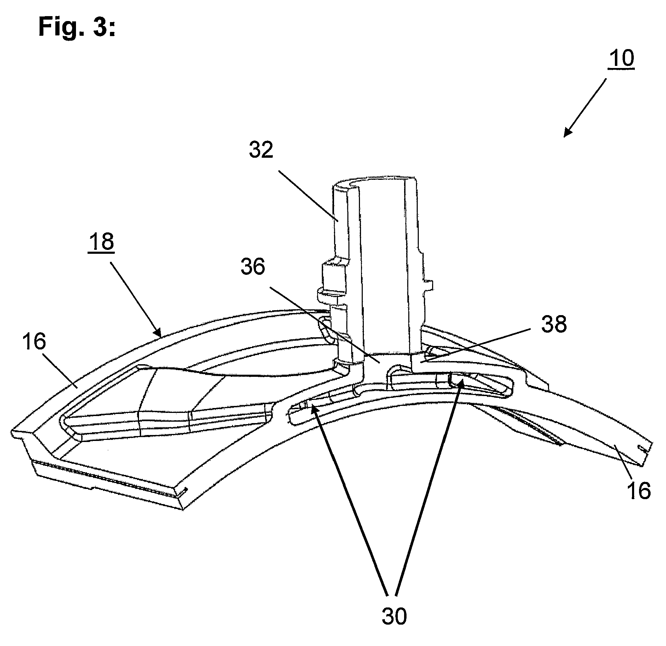

Figur 3 zeigt eine schematische, teilweise geschnittene Darstellung eines Gehäusesegments 16 des Gehäuses 10. In dem dargestellten Ausführungsbeispiel ist das Luftzuführelement 32 als Einschraubstutzen ausgebildet. Die Abdichtung zwischen dem Luftzuführelement 32 und dem Kragen 38 des Gehäusesegments 16 erfolgt durch einen O-Ring (nicht dargestellt). Des Weiteren erkennt man die integral in dem Gehäusesegment 16 ausgebildeten Luftführungskanäle 30.

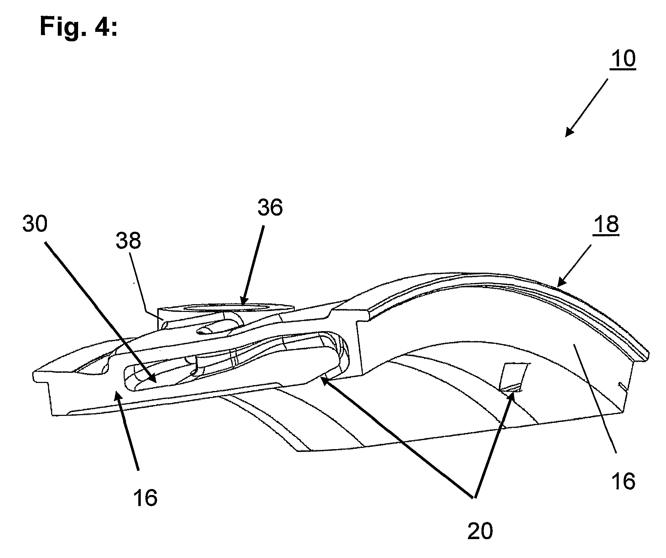

Figur 4 zeigt eine schematische, teilweise geschnittene Darstellung des Gehäusesegments 16 des Gehäuses 10. Aus dieser Darstellung wird die Anordnung des Luftführungskanals 30 und der Einblasungsdüsen 20 deutlich. Auf dem Kragen 38 ist wiederum das Luftzuführelement 32 anordenbar, die Luftzufuhr erfolgt über die Öffnung 36.

Aus den Figuren wird zudem deutlich, dass das jeweilige Gehäusesegment 16 gebogen ausgebildet ist, so dass eine Vielzahl von Gehäusesegmenten 16 das kreisförmige Innengehäuse 18 des Verdichtergehäuses 10 ausbilden.

## Patentansprüche

1. Gehäuse für einen Verdichter einer Gasturbine, insbesondere einer Fluggasturbine, mit einem Außengehäuse (12) mit mindestens einer Luftzuführöffnung (14) und einem aus mindestens zwei Gehäusesegmenten (16) ausgebildeten Innengehäuse (18), wobei jedes dieser Gehäusesegmente (16) jeweils mindestens eine Einblasungsdüse (20) zum Einblasen von über die mindestens eine Luftzuführöffnung (14) zugeführter Luft in einen Strömungskanal (22) im Bereich von Schaufelspitzen (26) von Schaufeln (24) eines Rotors (28) des Verdichters aufweist, wobei diesen Gehäusesegmenten (16) jeweils ein Luftzuführelement (32) zugeordnet ist, das in einer Luftzuführungsöffnung (14) des Außengehäuses (12) angeordnet ist, wobei in diesen Gehäusesegmenten (16) jeweils mindestens ein separater Luftführungskanal (30) integral ausgebildet ist, der die Luft (30) jeweils aus dem zugeordneten Luftzuführelement (32) direkt zu der mindestens einen Einblasungsdüse (20) führt.

2. Gehäuse nach Anspruch 1, **dadurch gekennzeichnet, dass** das Luftzuführelement (32) einstückig mit dem Gehäusesegment (16) ausgebildet oder als separates Element ausgebildet ist.

3. Gehäuse nach Anspruch 1 oder 2, **dadurch gekennzeichnet, dass** das Luftzuführelement (32) stutzen- oder rohrartig ausgebildet ist.

4. Gehäuse nach einem der vorhergehenden Ansprüche, **dadurch gekennzeichnet, dass** das Luftzuführelement (32) als Einschraubstutzen ausgebildet ist, derart, dass eine Verschraubung des Luftzuführelements (32) am Außengehäuse (12) erfolgt.

5. Gehäuse nach einem der Ansprüche 2 bis 4, **dadurch gekennzeichnet, dass** an dem dem Außengehäuse (12) zugewandten Bereich des Gehäusesegments (16) ein eine Öffnung (36) umgebender Kragen (38) zur Auflage des Luftzuführelements (32) ausgebildet ist.

6. Gehäuse nach einem der vorhergehenden Ansprüche, dadurch gekennzeichet, dass zwischen dem Luftzuführelement (32) und dem Luftführungskanal (30) mindestens eine Dichtung (34), insbesondere eine als O-Ring ausgebildete Dichtung angeordnet ist.

7. Gehäuse nach einem der vorhergehenden Ansprüche, **dadurch gekennzeichnet, dass** die Einblasungsdüsen (20) schlitzartig ausgebildet sind.

8. Gehäuse nach einem der vorhergehenden Ansprüche, **dadurch gekennzeichnet, dass** das Gehäusesegment (16) aus Metall, einer Metall-Legierung, aus Keramik, einem faserverstärktem Verbundwerkstoff oder aus einer Kombination von mindestens zwei dieser Werkstoffe besteht.

9. Gehäuse nach einem der vorhergehenden Ansprüche, **dadurch gekennzeichnet, dass** das Gehäusesegment (16) ein mittels eines generativen Fertigungsverfahrens und/oder eines elektrochemischen Bearbeitungsverfahrens und/oder mittels Feingießen hergestelltes Bauteil ist.

10. Gehäuse nach Anspruch 9, **dadurch gekennzeichnet, dass** das Gehäusesegment (16) ein mittels Laser-Sintern hergestelltes Bauteil ist.

11. Verdichter einer Gasturbine, insbesondere einer Fluggasturbine, mit einem Gehäuse nach einem der Ansprüche 1 bis 10.

## Claims

1. Housing for a compressor of a gas turbine, in particular an aircraft turbine, having an outer housing (12) having at least one air supply opening (14) and one inner housing (18) formed from at least two housing segments (16), wherein each of these housing segments (16) respectively has at least one injection nozzle (20) to blow air supplied via the at least one air supply opening (14) into a flow channel (22) in the region of blade tips (26) of blades (24) of a rotor (28) of the compressor,
wherein a respective air supply element (32) is allocated to these housing segments (16), said air supply element being arranged in an air supply opening (14) of the outer housing (12), wherein at least one respective separate air supply channel (30) is integrally formed in these housing segments (16), said air supply channel guiding the air (30) respectively from the allocated air supply element (32) directly to the at least one injection nozzle (20).

2. Housing according to claim 1, **characterised in that** the air supply element (32) is formed in one piece with the housing segment (16) or is formed as a separate element.

3. Housing according to claim 1 or 2, **characterised in that** the air supply element (32) is formed to be connector- or tube-like.

4. Housing according to one of the preceding claims, **characterised in that** the air supply element (32) is formed as a screw-in connector in such a way that a screwing of the air supply element (32) onto the outer housing (12) occurs.

5. Housing according to one of claims 2 to 4, **characterised in that** a collar (38) surrounding an opening (36) is formed on the region of the housing segment (16) facing towards the outer housing (12) to support the air supply element (32).

6. Housing according to one of the preceding claims, **characterised in that** at least one seal (34), in particular a seal formed as an O-ring, is arranged between the air supply element (32) and the air supply channel (30).

7. Housing according to one of the preceding claims, **characterised in that** the injection nozzles (20) are formed to be slot-like.

8. Housing according to one of the preceding claims, **characterised in that** the housing segment (16) consists of metal, a metal alloy, of ceramic, a fibre-reinforced composite material or of a combination of at least two of these materials.

9. Housing according to one of the preceding claims, **characterised in that** the housing segment (16) is a component produced by means of a generative production method and/or an electrochemical processing method and/or by means of high-quality casting.

10. Housing according to claim 9, **characterised in that** the housing segment (16) is a component produced by means of laser sintering.

11. Compressor of a gas turbine, in particular an aircraft turbine, having a housing according to one of claims 1 to 10.

## Revendications

1. Carter pour un compresseur d'une turbine à gaz, en particulier d'une turbine à gaz d'avion, avec un carter externe (12) présentant au moins une ouverture d'entrée d'air (14) et un carter interne (18) constitué d'au moins deux segments (16) de carter, chacun desdits segments (16) de carter présentant au moins une buse de soufflage (20) pour le soufflage de l'air amené par ladite au moins une ouverture d'entrée d'air (14) dans un canal d'écoulement (22) au niveau de sommets (26) des aubes (24) d'un rotor (28) du compresseur, un élément d'amenée d'air (32) étant associé à chacun desdits segments (16) de carter, lequel est monté dans une ouverture d'amenée d'air (14) du carter externe (12), au moins un canal d'amenée d'air (30) séparé étant formé d'un seul tenant dans chacun desdits segments (16) de carter, lequel conduit l'air (30) de l'élément d'amenée d'air (32) directement vers ladite au moins une buse de soufflage (20).

2. Carter selon la revendication 1, **caractérisé en ce que** l'élément d'amenée d'air (32) est réalisé d'un seul tenant avec le segment (16) de carter ou est réalisé comme élément distinct.

3. Carter selon la revendication 1 ou 2, **caractérisé en ce que** l'élément d'amenée d'air (32) est réalisé en forme de tubulure ou de tuyau.

4. Carter selon l'une des revendications précédentes, **caractérisé en ce que** l'élément d'amenée d'air (32) est réalisé comme tubulure vissable, de manière à exécuter un vissage de l'élément d'amenée d'air (32) sur le carter externe (12).

5. Carter selon l'une des revendications 2 à 4, **caractérisé en ce qu'**un rebord (38) entourant une ouverture (36) est formé sur la partie du segment (16) de carter opposée au carter externe (12) pour l'appui de l'élément d'amenée d'air (32).

6. Carter selon l'une des revendications précédentes, **caractérisé en ce qu'**au moins un joint (34), en particulier un joint réalisé comme joint torique, est disposé entre l'élément d'amenée d'air (32) et le canal d'amenée d'air (30).

7. Carter selon l'une des revendications précédentes, **caractérisé en ce que** les buses de soufflage (20) sont réalisées en forme de fentes.

8. Carter selon l'une des revendications précédentes, **caractérisé en ce que** le segment (16) de carter est en metal, en alliage métallique, en céramique, en matériau composite renforcé par des fibres ou consiste en une combinaison d'au moins deux desdits matériaux.

9. Carter selon l'une des revendications précédentes, **caractérisé en ce que** le segment (16) de carter est un composant fabriqué au moyen d'un procédé de fabrication génératif et/ou d'un procédé d'usinage électrochimique et/ou par moulage à modèle perdu.

10. Carter selon la revendication 9, **caractérisé en ce que** le segment (16) de carter est un composant fabriqué par frittage par laser.

11. Compresseur d'une turbine à gaz, en particulier d'une turbine à gaz d'avion, comprenant un carter selon l'une des revendications 1 à 10.
